# EUROPEAN PATENT SPECIFICATION

(11) **EP 0 724 702 B1**
(45) Date of publication and mention of the grant of the patent: **26.05.1999**
(21) Application number: 94929737.8
(22) Date of filing: 29.08.1994
(51) Int. Cl.: F24H 1/00, A47J 36/26, A47J 31/00

(54) **GAS-FLAME KETTLE**
GAS-BEHEIZTER WASSERERHITZER
BOUILLOIRE CHAUFFEE PAR UNE FLAMME DE GAZ

(30) Priority: 09.09.1993 IL 10696093
(43) Date of publication of application: 07.08.1996
(73) Proprietor: Etzion Gas Products Ltd., North Judea 90912 (IL)
(72) Inventor: SHEINFELD, Naftali, Mobile Post North, 90200 Yehuda (IL); HUSS, Shmuel, 97280 Jerusalem (IL); SCMUELSON, Ilya, 71360 Lod (IL)
(74) Representative: Ablewhite, Alan James
(86) International application number: US9409689
(87) International publication number: WO9507440

(56) References cited:
- EP-A- 0 589 045
- DE-U- 9 101 813
- US-A- 3 709 198
- US-A- 3 730 165
- US-A- 3 978 844
- US-A- 4 191 173
- US-A- 4 512 328
- US-A- 4 829 981

## Description

The present invention relates to a gas-flame heated kettle. More particularly, the invention provides a portable, efficient, safe, self-contained kettle and gas burner which can be operated in any location where there is an air atmosphere.

The provision of hot drinks is often appreciated by people who are away from their homes or workplaces, whether they are on an outing or picnic, or whether because of the demands of their professions, they are at an outdoor site where there is no available electric power. Soldiers on reserve duty also require hot drinks when out in the field.

The insulated thermos bottle has long provided a convenient method of holding small quantities of hot water or beverages. A well-designed thermos container will keep its contents relatively hot for a day, but provides unsatisfactory hot storage for longer periods of time.

For those travelling by automobile, there is available a water heater which is powered by the vehicle battery through the socket of the cigarette lighter. Water heating is rather slow; vehicle batteries are not intended for this type of service.

Small quantities of water can be suitably heated with chemical fuel tablets, provided that the water container is provided with suitable support means.

For those who are willing to search for natural fuel such as small tree branches and to build a fire therefrom, there is available a folding cooker which, when deployed, shields the fire and supports but does not shield a cooking vessel, which is not included in the cooker pack. The cooker is held in a compact belt pouch when not in use.

There is little doubt that, where larger quantities of hot fluid are required in a reasonably short time, the portable gas cooker provides the most convenient solution. Such devices comprise a container of cooking gas, which is rechargeable and usually has a capacity in the range of 0.5 to 5 kg, the container serving as a base for a gas burner, control tap and kettle stand, all of which are provided and connected to said container from above.

Similar but smaller gas flame cookers are available which are intended to be assembled to disposable gas containers, which usually hold between 150 and 500 grams of compressed cooking gas. The smallest size disposable container may be obtained for one-time use. No gas control is provided; the user simply punctures the upper dome of the container and ignites the emitted gas stream.

As is well-known to hikers and campers, the various flame-operated cookers described above require protection from strong winds, for two reasons. First, the area of the flame requires protection to prevent its extinction. Second, the fluid container also requires protection, as the high heat losses resulting from forced convection from the fluid container's outer walls will result in an unreasonably long heating time to bring the fluid to boil. Provision of such protection usually falls on the user.

There is no known portable fluid heating device which combines a protected burner and protected fluid container. Furthermore, the fuel-operated devices described above are not provided with their own ignition sources.

It is therefore one of the objects of the present invention to obviate the disadvantages of the prior art portable fluid heaters and to provide a gas-operated fluid heater for water, coffee, tea, soups and the like which is fast, efficient, self-contained and can be operated anywhere in the atmosphere.

The present invention achieves the above objectives by providing an automatic shut-off, gas-flame heated, self-contained kettle comprising a housing, a gas burner container within the housing, and a container for the fluid to be heated, positioned within the housing and the above burner, a chamber within the housing for containing a compressed gas container, and a gas feed line leading from the compressed gas container to the gas burner. Exhaust ducts lead from an area above the burner, through the container and a surface thereof, to the outside. Excess heat and combustion gases are exhausted in heat-exchange contact with fluid via ducts in the container for augmented heating of the fluid with simultaneous protection and insulation of the housing. Also provided is an automatic shut-off valve for closing the gas feed line. This valve is operatively linked to a plurality of sensors which close the valve in the absence of a flame at the burner, or in the absence of fluid in the fluid container, or on the attainment of a preset temperature in the fluid.

The burner used in the present invention is preferably of the type producing a concentrated rotating flame, as described in Israel Patent 66538 and corresponding U.S. Patent 4,583,941 (Elperin, et al.), the teachings of which are incorporated herein by reference.

Cooking vessels having an outer jacket surrounding an inner cooking chamber through which steam or heat passes have been known for more than 100 years, as can be seen, e.g., from U.S. Patents 474,622; 1,169,006; 1,746,261; 1,212,661; 2,483,069; 4,467,783 and 5,125,393. However, none of said patents teaches or suggests a gas-flame heated, self-contained kettle as defined herein, wherein exhaust ducts lead from an area above a burner forming an integral part of said vessel through passages provided in the container itself, whereby said passages are surrounded by the liquid to be heated and therefore totally absorb the heat radiating therefrom instead of allowing the same to heat the outer surface of the housing, as occurs in all of the above patents.

The invention will now be described in connection with certain preferred embodiments with reference to the following illustrative figures so that it may be more fully understood.

In the drawings:
- Fig. 1a: shows a perspective view of a gas-flame kettle;
- Fig. 1b: is a diagrammatic view of Fig. 1a;
- Fig. 2: is a diagrammatic view of a gas-flame kettle provided with its own gas supply;
- Fig. 3: is a diagrammatic view of an embodiment of a kettle according to the invention provided with automatic shut-off devices;
- Fig. 4a: is a diagrammatic view of a kettle provided with its own ignition means;
- Fig. 4b: is a cross-sectional elevational view of a shut-off valve suitable for use in the kettle;
- Fig. 5: is a diagrammatic view of a further embodiment of the invention, provided with means for reignition of an extinguished gas flame.

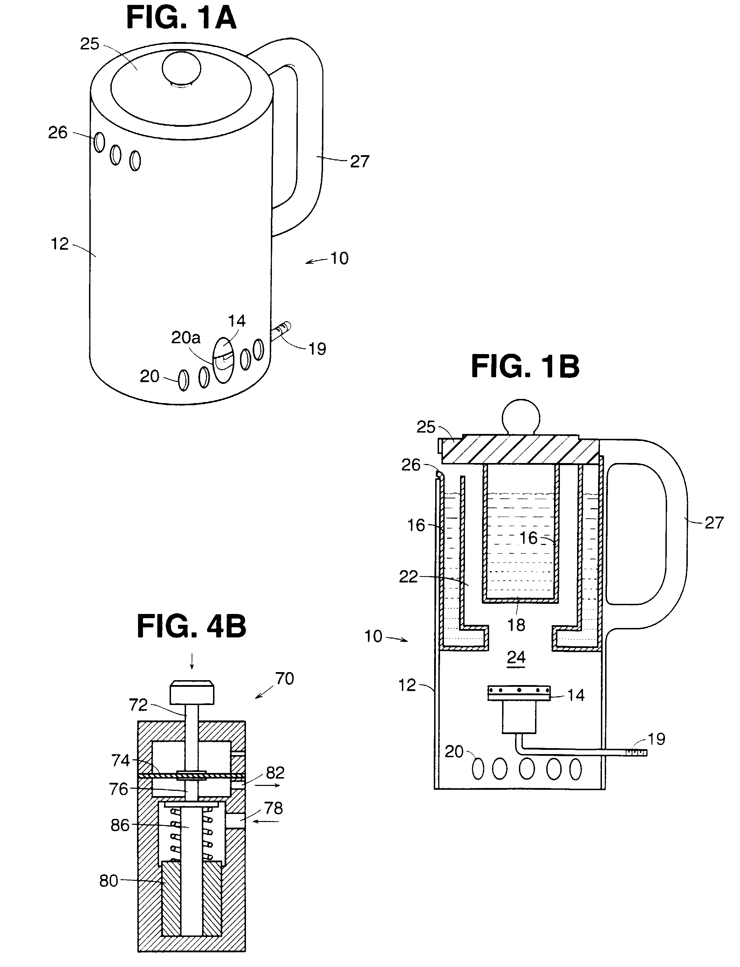

Referring now to the drawings, there is seen in Figs. 1a and 1b a gas-flame heated, self-contained kettle 10, having a lid 25 and a handle 27. Housing 12 serves to contain and shield from wind a gas burner 14 and a container 16 for the fluid 18 to be heated. Housing 12 may suitably be made of any suitable material having good heat resistance, for example, a thermoplastic polymer such as a glass-reinforced acetal, nylon or polycarbonate. At slightly higher cost, it is possible to use a thermoset polymer and to thus produce a housing resistant to higher temperatures.

For example, a glass-reinforced phenolic can be used to produce a black or brown coloured housing which is stable at 260°C.

The gas burner 14 is positioned in the lower part of the housing 12 and is provided with a gas entry port 19, to allow its connection to an external source of cooking gas (not shown).

Air inlet apertures 20 are provided in the lower part of the housing 12. One of these apertures 20a is sufficiently large to provide access for manual ignition.

Container 16 for the fluid 18 to be heated can suitably be made of any material used for cooking pots, such as steel or aluminum. The container 16 is positioned in housing 12 above burner 14. A container 16 holding one liter of fluid can be brought to the boiling point in under 3 minutes.

Exhaust ducts 22 lead from area 24 above burner 14 through the container 16 and out of surface 26 of housing 12. Excess heat and combustion gases are exhausted therethrough in heat-exchange contact with fluid 18, via ducts 22, for augmented heating of fluid 18. A further advantage of ducts 22 is the provision of simultaneous protection and insulation of housing 12, thus making possible the use of a thermoplastic polymer, as mentioned above.

Kettle 10 is a light-weight, low-cost embodiment, which can be connected to any type of gas container.

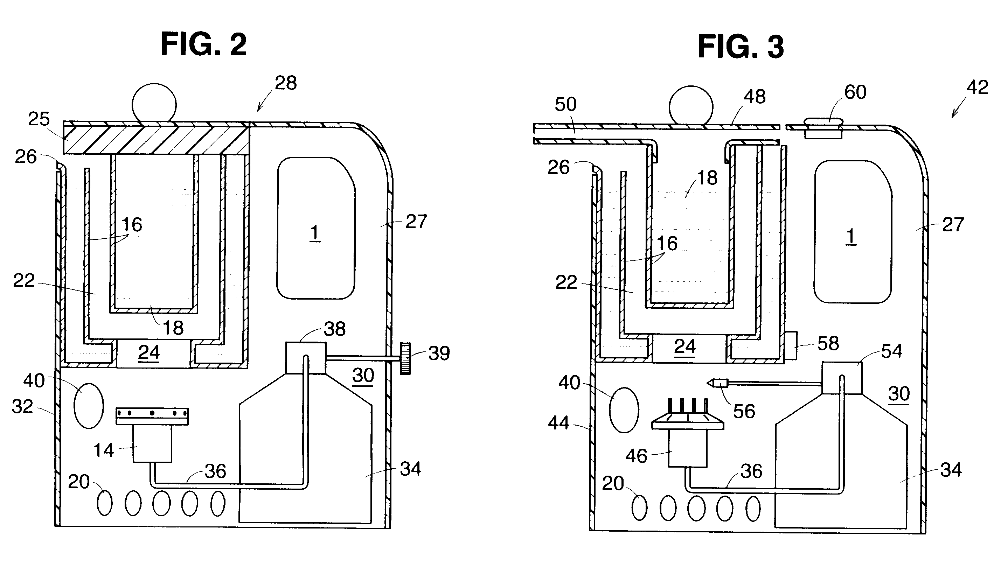

Fig. 2 shows an embodiment of kettle 28, provided with its own supply of gas fuel, but otherwise similar to kettle 10. A chamber 30 is provided within housing 32 for containing a compressed gas container 34. A gas feed line 36 leads from container 34 to the gas burner 14. Advantageously, gas feed line 36 is further provided with a gas control valve 38, accessible through a handle 39 from outside the housing 32. An aperture 40 is provided in housing 32 to allow access for manual ignition. Thus kettle 28 is a self-contained unit, being provided with a fluid container 16, a gas burner 14, a gas container 34 and a shielding housing 32. It is manually ignited and extinguished, and manufacturable at moderate cost. The housing is of molded plastic and includes an aperture 1 forming an integral gripping handle 27.

Fig. 3 depicts an automatic shut-off, gas-flame heated, self-contained kettle 42. Housing 44 contains near its base a gas burner 46, preferably of the type producing a concentrated rotating flame, as described in Israel Patent No. 66538 and corresponding U.S. Patent 4,583,941. Such a burner has an efficiency which is 20-30% higher than that of a similar conventional burner, achieved by reducing excess air intake and wasteful radiation, as is fully described in said patents. fluid container 16 and its associated exhaust ducts 22 are as described above with reference to Figs. 1a and 1b. Housing 44 is provided with cover 48, having a spout 50 in fluid communication with fluid container 16, for pouring fluid 18 therefrom.

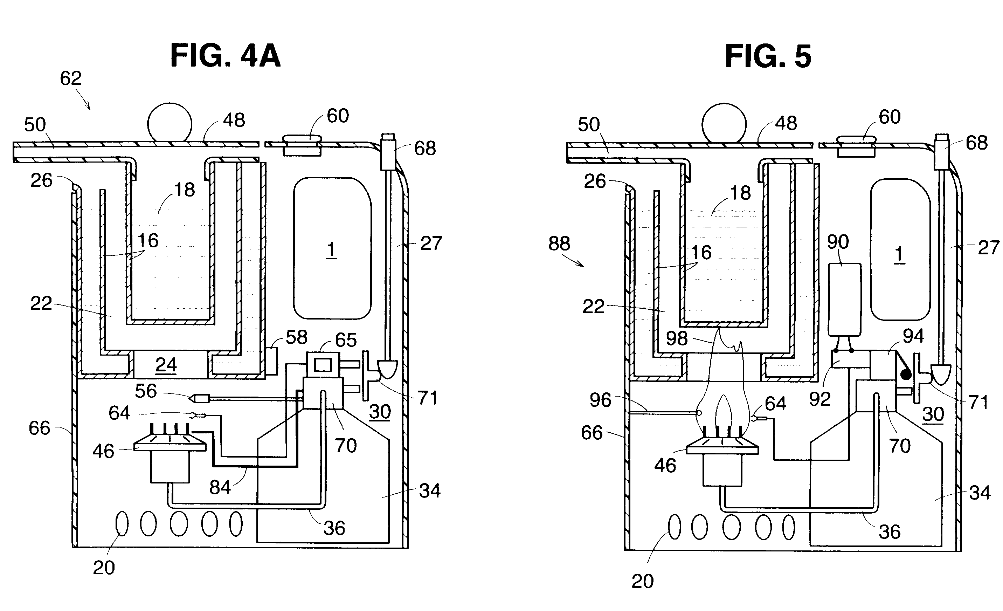

Chamber 30 is provided within housing 44, for containing a compressed gas container 34. Container 34 is preferably disposable, the advantage being weight reduction of the kettle 42. A gas feed line 36 leads from container 34 to gas burner 46. An automatic shut-off valve 54 is provided for closing the gas feed line 36. Valve 54 is operatively linked to a plurality of sensors 56, 58, 60, which effect its closure in the absence of a flame at burner 46, in the absence of fluid 18 in container 16, or upon the attainment of a preset temperature within fluid 18. Suitably sensor 60 is a steam sensor, for sensing the evolution of steam from the heated fluid and for closing valve 54. The operation of these sensors will be more fully described below, with reference to Fig. 4a.

Fig. 4a depicts a kettle 62, which is similar to kettle 42 but is also provided with an ignition device and further controls.

A mechanically-operated spark ignition device, comprising electrodes 64 and voltage generator 65, is provided in housing 66, being arranged to project sparks above the area of gas burner 46. Advantageously, device 64, 65 is operated by means of a manually-operated "ON" control 68, which also opens the shut-off valve 70 by the mechanical action resulting from pressure applied by the user to move the "ON" control downwards, and operates mechanism 71.

Fig. 4b shows details of the gas shut-off valve 70. In order to obviate the need for O-rings around valve stem 72, which would be likely to allow leakage of pressurized gas, the shut-off valve 70 is provided with membrane 74, through which mechanical action is transferred from the "ON" control 68 to the valve spool 76, thereby resulting in a leakproof valve so that the gas inlet 78 of said valve may be connected to a source of high-pressure gas without any leakage.

Shut-off valve 70 is further provided with a solenoid 80, which has an electrical rating allowing it to retain its open position by the holding current supplied by a thermocouple 84, which projects into the hot area of gas burner 46. The gas outlet valve 82 is connected to gas feed line 36. The electric power obtained from thermocouple 84 charges solenoid 80 sufficiently to maintain the valve in its open position, after release by the user of the "ON" control 68.

The following typical electrical values apply:

| | |
|---|---|
| Voltage produced by heated thermocouple | 3-40 mV |
| Ohmic resistance of solenoid coil | 13-18 mOhm |
| Solenoid holding current | 150-250 mA |

It is to be noted that the thermocouple 84 is not required to supply the power needed to move the valve spool from its open position; such movement is provided by the user pushing the "ON" control 68.

Sensors 56, 58 and 60 are arranged in series in an electrical circuit, together with thermocouple 84 and solenoid 80. When any sensor is activated, power is cut off from solenoid 80 and the valve 70 closes to prevent further discharge of gas. The closing force may be provided by the distorted membrane 74 as it regains its original disk-like shape.

Sensor 56 responds to the absence of a flame at burner 46 and cuts off the electric current supplied by thermocouple 84, which has been previously heated and, while remaining hot, continues to supply power to solenoid 80.

Similarly, sensor 58 responds to the absence of fluid 18 in fluid container 16 when burner 46 is in operation, by sensing an abnormally high temperature at the wall of fluid container 16; it also reacts by cutting off the electric current supplied by thermocouple 84.

Preferably, spring 86 is provided to close valve 70 when the solenoid 80 is not energized, thereby closing off the gas supply to burner 46. Operation of the "ON" control 68 will cause valve spool 76 to move against the small force exerted by spring 86 and to open valve 70.

By means of provision of the sensors described above, a high degree of safety is achieved.

Shown in Fig. 5 is kettle 88, provided with reignition means, but otherwise similar to kettle 62 described above with reference to Figs. 4a and 4b.

An electric battery 90 is provided in housing 66, and is connected to operate a spark ignition device comprising a voltage amplifier 92 and electrodes 64. Operation of the ignition device occurs when a normally "OFF" switch 94 is in its "ON" state.

Ion sensor 96 projects into gas flame 98. Upon extinguishing of flame 98, the sensor 96 reacts to a sharp reduction in ions present near the sensor head. Sensor 96 then acts to bring the switch 94 into its "ON" state, whereby the device 92, 64 will attempt to reignite the extinguished gas flame. As with other gas-fueled cooking devices, the flame 98 may be extinguished due to fluid spilling on burner 46, or because of unusual wind conditions. Automatic reignition as provided will prevent the unwanted discharge of cooking gas and thus will provide a further degree of safety and convenience for the user.

It is to be noted that no thermocouple is required, as the battery 90 is utilized to also provide power to hold valve 70 open during operation of the kettle.

## Claims

1. An automatic shut-off, gas-flame heated, self-contained kettle (42), comprising:
a housing (44),
a gas burner (46) contained within said housing;
a container (16) for the fluid to be heated, positioned within said housing (44) and above said burner (46);
a chamber (30) within said housing for containing a compressed gas container (34),
a gas feed line (36) leading from said compressed gas container (34) to said gas burner (46),
exhaust ducts (22) leading from an area (24) above said burner (46), through said container (16), and out of a surface (26) of said housing (44), whereby excess heat and combustion gases are exhausted in heat-exchange contact with fluid (18) in said container (16) via said ducts (22), for augmented heating of said fluid (18) with simultaneous protection and insulation of said housing (44), and
an automatic shut-off valve (54) for closing said gas feed line (36), said valve being operatively linked to a plurality of sensors (56, 58, 60) which close said valve
in the absence of a flame at the burner (46), or
in the absence of fluid (18) in said fluid container (16); or
on the attainment of a preset temperature within said fluid (18).

2. The automatic shut-off, gas-flame heated, self-contained kettle (42) as claimed in claim 1, wherein said housing (44) is provided with a cover (48) having a spout (50) in fluid communication with said fluid container (16) for pouring fluid (18) therefrom, and a steam sensor (60) for sensing the evolution of steam from the heated fluid and for closing said valve (54).

3. The automatic shut-off, gas-flame heated, self-contained kettle (42) as claimed in claim 1, wherein said burner (46) is of the type producing a concentrated rotating flame.

4. The automatic shut-off, gas-flame heated, self-contained kettle (42) as claimed in claim 1, wherein said compressed gas container (34) is disposable.

5. The automatic shutoff, gas-flame heated, self-contained kettle (62) as claimed in claim 1, further comprising a spark ignition device (64,65)

6. The automatic shut-off, gas-flame heated, self-contained kettle (62) as claimed in claim 5, further comprising a manually-operated "ON" control (68), which operates said spark ignition device (64,65) and opens said shut-off valve (70) by mechanical action

7. The automatic shut-off, gas-flame heated, self-contained kettle (62) as claimed in claim 6, wherein said shut-off valve (70) is provided with a membrane through which said mechanical action is transferred, whereby the inlet (78) of said valve (70) may be connected to a source of high pressure gas without resulting leakage

8. The automatic shut-off, gas-flame heated, self-contained kettle (62) as claimed in claim 6, wherein said shut-off valve (70) is provided with a solenoid (80) and a thermocouple (84) is provided to project into the hot area of said gas burner (46) the electric power from said thermocouple (84) charging the solenoid (80) sufficiently to maintain said valve (70) in its open position after release of said "ON" control (68)

9. The automatic shut-off, gas-flame heated, self-contained kettle (62) as claimed in claim 8, wherein a circuit is arranged to switch off power supplied to said solenoid (80) in response to a signal from any of multiple sensors (56,58,60), and a spring (86) is provided to close said valve (70) after said power is switched off.

10. An automatic shut-off, gas-flame heated, self-contained kettle (88) as claimed in claim 1 provided with reignition means, further comprising:
an electric battery (90);
an ion sensor (96) projecting into the gas flame (98);
a spark ignition device (92,64) which is connected to said electric battery (90) and said ion sensor (96) to reignite an extinguished gas flame.

11. An automatic shut-off, gas-flame heated, self-contained kettle (42) as claimed in claim 1, wherein said housing (44) is of a polymeric material.

12. An automatic shut-off, gas-flame heated, self-contained kettle (42) as claimed in claim 11, wherein said housing (44) is made of a thermoset polymeric material.

13. An automatic shut-off, gas-flame heated, self-contained kettle (42) as claimed in claim 1, wherein said housing (44) includes an aperture (1) forming a gripping handle (27).

## Patentansprüche

1. Unabhängiger, gasflammenbeheizter Flüssigkeitserhitzer (42) mit automatischer Abschaltung, der folgende Komponenten umfaßt:
ein Gehäuse (44);
einen Gasbrenner (46), der sich innerhalb des Gehäuses befindet;
einen Behälter (16) für die zu erhitzende Flüssigkeit, der sich innerhalb des Gehäuses (44) und oberhalb des Brenners (46) befindet;
eine Kammer (30) innerhalb des Gehäuses zur Aufnahme eines Druckgasbehälters (34);
eine Gaszuleitung (36), die von dem Druckgasbehälter (34) zu dem Gasbrenner (46) führt;
Abgasleitungen (22), die von einem Bereich (24) über dem Brenner (46) durch den Behälter (16) und von einer Fläche (26) des Gehäuses (44) nach außen führen, wodurch überschüssige Wärme und Verbrennungsgase im Wärmeaustauschkontakt mit der Flüssigkeit (18) in dem Behälter (16) über die Leitungen (22) abgeführt werden, um zum Erhitzen der Flüssigkeit (18) beizutragen und gleichzeitig das Gehäuse (44) zu schützen und zu isolieren, und
ein automatisches Abschaltventil (54) zum Schließen der Gaszuleitung (36), wobei das Ventil funktionell mit einer Vielzahl von Sensoren (56, 58, 60) verbunden ist, die das Ventil in folgenden Situationen schließen:
beim Fehlen einer Flamme am Brenner (46), oder
beim Fehlen von Flüssigkeit (18) in dem Flüssigkeitsbehälter (16): oder
beim Erreichen einer festgelegten Temperatur innerhalb der Flüssigkeit (18).

2. Unabhängiger, gasflammenbeheizter Flüssigkeitserhitzer (42) mit automatischer Abschaltung nach Anspruch 1, bei dem das Gehäuse (44) mit einem Deckel (48), der einen Ausguß (50) in Flüssigkeitsverbindung mit dem Flüssigkeitsbehälter (16) zum Ausgießen von Flüssigkeit (18) aus diesem hat, und einem Dampfsensor (60) zum Feststellen der Dampfentwicklung von der erhitzten Flüssigkeit und zum Schließen des Ventils (54) versehen ist.

3. Unabhängiger, gasflammenbeheizter Flüssigkeitserhitzer (42) mit automatischer Abschaltung nach Anspruch 1, bei dem es sich um einen Brenner (46) des Typs handelt, der eine konzentrierte rotierende Flamme erzeugt.

4. Unabhängiger, gasflammenbeheizter Flüssigkeitserhitzer (42) mit automatischer Abschaltung nach Anspruch 1, bei dem der Druckgasbehälter (34) ein Einwegelement ist.

5. Unabhängiger, gasflammenbeheizter Flüssigkeitserhitzer (62) mit automatischer Abschaltung nach Anspruch 1, der außerdem eine Funkenzündvorrichtung (64, 65) aufweist.

6. Unabhängiger, gasflammenbeheizter Flüssigkeitserhitzer (62) mit automatischer Abschaltung nach Anspruch 5, der außerdem einen handbetätigten Einschalter (68) aufweist, der die Funkenzündvorrichtung (64, 65) betätigt und das Abschaltventil (70) durch mechanische Wirkung öffnet.

7. Unabhängiger, gasflammenbeheizter Flüssigkeitserhitzer (62) mit automatischer Abschaltung nach Anspruch 6, bei dem das Abschaltventil (70) mit einer Membran versehen ist, durch welche die mechanische Wirkung übertragen wird, wodurch der Einlaß (78) des Ventils (70) ohne das Auftreten von Lecken mit einer Quelle für Hochdruckgas verbunden werden kann.

8. Unabhängiger, gasflammenbeheizter Flüssigkeitserhitzer (62) mit automatischer Abschaltung nach Anspruch 6, bei dem das Abschaltventil (70) mit einem Solenoiden (80) und einem Thermoelement (84) zum Hineinragen in den heißen Bereich des Gasbrenners (46) versehen ist, wobei die elektrische Energie von dem Thermoelement (84) das Solenoid (80) ausreichend auflädt, um das Ventil (70) nach der Freigabe des Einschalters (68) in der offenen Position zu halten.

9. Unabhängiger, gasflammenbeheizter Flüssigkeitserhitzer (62) mit automatischer Abschaltung nach Anspruch 8, bei dem ein Stromkreis vorhanden ist, um die Energie, die dem Solenoiden (80) zugeführt wird, in Reaktion auf ein Signal von einem der mehreren Sensoren (56, 58, 60) abzuschalten, und eine Feder (86) vorhanden ist, um das Ventil (70) zu schließen, nachdem die Energie abgeschaltet worden ist.

10. Unabhängiger, gasflammenbeheizter Flüssigkeitserhitzer (88) mit automatischer Abschaltung nach Anspruch 1, der mit einem Wiederanzündungsmittel versehen ist, der weiter folgendes umfaßt:
eine elektrische Batterie (90);
einen Ionensensor (96), der in die Gasflamme (98) hinein vorsteht;
eine Funkenzündvorrichtung (92, 64), die mit der elektrischen Batterie (90) und dem Ionensensor (96) verbunden ist, um eine erloschene Gasflamme wieder anzuzünden.

11. Unabhängiger, gasflammenbeheizter Flüssigkeitserhitzer (42) mit automatischer Abschaltung nach Anspruch 1, bei dem das Gehäuse (44) aus einem polymeren Material besteht.

12. Unabhängiger, gasflammenbeheizter Flüssigkeitserhitzer (42) mit automatischer Abschaltung nach Anspruch 11, bei dem das Gehäuse (44) aus einem wärmeausgehärteten polymeren Material besteht.

13. Unabhängiger, gasflammenbeheizter Flüssigkeitserhitzer (42) mit automatischer Abschaltung nach Anspruch 1, bei dem das Gehäuse (44) eine Öffnung (1) einschließt, die einen Handgriff (27) bildet.

## Revendications

1. Bouilloire autonome à arrêt automatique chauffée par une flamme de gaz (42), comprenant:
un boîtier (44);
un brûleur à gaz (46) contenu dans ledit boîtier;
un réservoir (16) du fluide devant être chauffé, positionné dans ledit boîtier (44) et au-dessus dudit brûleur (46);
une chambre (30) dans ledit boîtier, destinée à contenir un réservoir de gaz comprimé (34);
une conduite d'alimentation de gaz (36) menant dudit réservoir de gaz comprimé (34) vers ledit brûleur à gaz (46);
des conduits d'échappement (22), menant d'une zone (24) située au-dessus dudit brûleur (46), à travers ledit réservoir (46) et en-dehors d'une surface (26) dudit boîtier (44), la chaleur excédentaire et les gaz de combustion étant ainsi évacués en contact d'échange thermique avec le fluide (18) dans ledit réservoir (16) par l'intermédiaire desdits conduits (22), en vue d'un chauffage accru dudit fluide (18), avec une protection et une isolation simultanées dudit boîtier (44); et
une vanne d'arrêt automatique (54), destinée à fermer ladite conduite d'alimentation de gaz (36), ladite vanne étant reliée en service à plusieurs capteurs (56, 58, 60) fermant ladite vanne
en l'absence d'une flamme au niveau du brûleur (46), ou
en l'absence de fluide (18) dans ledit réservoir de fluide (16); ou
lors de l'atteinte d'une température préréglée dans ledit fluide (18).

2. Bouilloire autonome à arrêt automatique, chauffée par une flamme de gaz (42) selon la revendication 1, dans laquelle ledit boîtier (44) comporte un couvercle (48) comportant un bec (50), en communication de fluide avec ledit réservoir de fluide (16) pour verser le fluide (18) à partir de celui-ci, et un capteur de vapeur (60) pour détecter l'évolution de la vapeur à partir du fluide chauffé et pour fermer ladite vanne (54).

3. Bouilloire autonome à arrêt automatique, chauffée par une flamme de gaz (42) selon la revendication 1, dans laquelle ledit brûleur (46) est du type produisant une flamme rotative concentrée.

4. Bouilloire autonome à arrêt automatique, chauffée par une flamme de gaz (42) selon la revendication 1, dans laquelle ledit réservoir de gaz comprimé (34) est jetable.

5. Bouilloire autonome à arrêt automatique, chauffée par une flamme de gaz (62) selon la revendication 1, comprenant en outre un dispositif à allumage par étincelle (64, 65).

6. Bouilloire autonome à arrêt automatique, chauffée par une flamme de gaz (62) selon la revendication 5, comprenant en outre une commande "MARCHE" à actionnement manuel (68), actionnant ledit dispositif à allumage par étincelle (64, 65) et ouvrant ladite vanne d'arrêt (70) par une action mécanique.

7. Bouilloire autonome à arrêt automatique, chauffée par une flamme de gaz (62) selon la revendication 6, dans laquelle ladite vanne d'arrêt (70) comporte une membrane à travers laquelle est transférée ladite action mécanique, l'entrée (78) de ladite vanne (70) pouvant ainsi être connectée à une source de gaz haute pression sans fuite résultante.

8. Bouilloire autonome à arrêt automatique, chauffée par une flamme de gaz (62) selon la revendication 6, dans laquelle ladite vanne d'arrêt (70) comporte un solénoïde (80) et un thermocouple (84) faisant saillie dans la zone chaude dudit brûleur à gaz (46), l'énergie électrique dudit thermocouple (84) chargeant le solénoïde (80) de façon suffisante pour maintenir ladite vanne (70) dans sa position ouverte après le relâchement de ladite commande "MARCHE" (68).

9. Bouilloire autonome à arrêt automatique, chauffée par une flamme de gaz (62) selon la revendication 8, comportant un circuit pour débrancher l'énergie transmise audit solénoïde (8) en réponse à un signal transmis par un quelconque de multiples capteurs (56, 58, 60), un ressort (86) servant à fermer ladite vanne (70) après le débranchement de ladite énergie.

10. Bouilloire autonome à arrêt automatique, chauffée par une flamme de gaz (88) selon la revendication 1, comportant un moyen de rallumage, et comprenant en outre:
une batterie électrique (90);
un capteur ionique (96) débordant dans la flamme de gaz (98);
un dispositif à allumage par étincelle (92, 64) connecté à ladite batterie électrique (90) et audit capteur ionique (96) pour rallumer une flamme de gaz éteinte.

11. Bouilloire autonome à arrêt automatique, chauffée par une flamme de gaz (42) selon la revendication 1, dans laquelle ledit boîtier (44) est composé d'une matériau polymère.

12. Bouilloire autonome à arrêt automatique, chauffée par une flamme de gaz (42) selon la revendication 11, dans laquelle ledit boîtier (44) est composé d'une matériau polymère thermodurci.

13. Bouilloire autonome à arrêt automatique, chauffée par une flamme de gaz (42) selon la revendication 1, dans laquelle ledit boîtier (44) englobe une ouverture (1) formant une anse de préhension (27).
